Europäisches Patentamt

European Patent Office

Office européen des brevets

(19)

(11) Veröffentlichungsnummer: **0 054 948**
**B1**

(12) **EUROPÄISCHE PATENTSCHRIFT**

(45) Veröffentlichungstag der Patentschrift:
12.12.84

(21) Anmeldenummer: 81110622.8

(22) Anmeldetag: 19.12.81

(51) Int. Cl.³: **B 60 N 1/00,** B 62 D 33/06,
E 02 F 9/16

(54) Fahrerstand.

(30) Priorität: 24.12.80 US 219986

(43) Veröffentlichungstag der Anmeldung:
30.06.82 Patentblatt 82/26

(45) Bekanntmachung des Hinweises auf die Patenterteilung:
12.12.84 Patentblatt 84/50

(84) Benannte Vertragsstaaten:
AT DE FR GB IT SE

(56) Entgegenhaltungen:
DE - A - 2 510 204
GB - A - 1 185 848
GB - A - 1 206 030
US - A - 3 357 717
US - A - 4 008 500
US - A - 4 059 171

(73) Patentinhaber: DEERE & COMPANY, 1 John Deere
Road, Moline Illinois 61265 (US)

(72) Erfinder: Thompson, Raymond Dennis, 1830 Lorraine
Avenue, Waterloo Iowa 50702 (US)
Erfinder: Woods, Terrill Wayne, 1022 West 10th Street,
Cedar Falls Iowa 50613 (US)
Erfinder: Wright, Darrell Lynn, 4317 Clearview Drive,
Cedar Falls Iowa 50613 (US)
Erfinder: Conner, James Mervyn, 23 Center Drive, Old
Greenwich Connecticut 06870 (US)
Erfinder: Crookes, William Edward, 30 John Dow Road,
Waldwick New Jersey 07563 (US)
Erfinder: Purcell, William Frederick, 1001 Park Avenue,
New York New York 10028 (US)
Erfinder: Brown, Ross Kyril, 2623 Loma Street, Cedar
Falls Iowa 50613 (US)

(74) Vertreter: Gramm, Werner, Prof. Dipl.-Ing.,
Patentanwälte Gramm + Lins Theodor-Heuss-Strasse 2,
D-3300 Braunschweig (DE)

## Beschreibung

Die Erfindung betrifft einen aufgehängten Fahrerstand, bestehend aus

einer Plattform, die auf einem tragenden Boden montiert und diesem gegenüber lageveränderlich ist,
einem auf der Plattform montierten Fahrersitz,
einer Sitzhöhenverstelleinrichtung,
mehreren Bedienungsorganen, und aus Verstelleinrichtungen zur relativen Lageveränderung der Bedienungsorgane gegenüber dem Fahrersitz.

Ein derartiger Fahrerstand läßt sich der Patentschrift US-A-3 357 717 entnehmen. Bei dieser vorbekannten Ausführungsform steigt die Plattform nach hinten an. Der Fahrersitz ist auf dieser schrägen Plattform so montiert, daß der Fahrersitz gegenüber der Plattform nach oben oder unten und nach vorn oder aber nach hinten verschoben und in der gewünschten Endstellung arretiert werden kann. Zwischen Fahrersitz und Plattform ist ein Drehgelenk vorgesehen, das eine Drehung des Fahrersitzes gegenüber dem Boden zuläßt. Getragen wird die Plattform von einem sich auf dem Boden abstützenden Federsystem, das die Plattform und damit den Fahrersitz in erster Linie in lotrechter Richtung federnd abstützt. Bei Verwendung von federnd abgestützten Lenkern führt der Fahrersitz beim lotrechten Abfedern zugleich auch eine geringe Horizontalbewegung aus.

Ferner ist bei dieser vorbekannten Ausführungsform mit der Plattform ein Unterboden verbunden, der zur Abstützung der Füße des Fahrers dient und außerdem eine verschwenkbare Teleskop-Lenksäule trägt. An dem obersten Teleskopteil der Lenksäule ist ein Armaturenbrett befestigt.

Ein derartiger Fahrerstand ist besonders geeignet für den Einbau in die Fahrerkabine eines Schleppers od. dgl., aber auch für Flugzeuge oder z. B. als Sitz für einen Angler auf einem Sportboot. Bei allen Anwendungsfällen kommt es in erster Linie darauf an, dem Fahrer einen möglichst hohen Sitzkomfort zu gewährleisten. Hierfür wurden vor allem zahlreiche Feder- und Dämpfungssysteme für den Fahrersitz entwickelt.

Durch die US-Patentschrift 4 059 171 ist eine Ausführungsform bekanntgeworden, bei der Lenkradsäule und Fahrersitz auf einer gemeinsamen flachen Plattform montiert sind, die gegenüber dem Boden um 180° gedreht werden kann, um so der jeweiligen Fahrtrichtung des Fahrzeuges angepaßt zu werden. In den US-Patentschriften 4 200 166 und 4 026 379 werden Ausführungsformen vorgeschlagen, bei denen einige Bedienungsorgane in eine Armlehne des Fahrersitzes oder eine neben der Armlehne angeordnete Konsole eingebaut sind. Die US-Patentschrift 4 194 716 zeigt eine Ausführungsform, bei der sich der Fahrersitz gegenüber dem Boden auf einer Dämpfungseinrichtung abstützt; außerdem kann der Fahrersitz gegenüber dem Boden durch eine Höhenverstelleinrichtung lotrecht angehoben bzw. abgesenkt und wahlweise nach vorn bzw. hinten verschoben werden.

Der Erfindung am nächsten kommt aber die eingangs erläuterte Ausführungsform, wie sie sich der US-Patentschrift 3 357 717 entnehmen läßt. Bei diesem Lösungsvorschlag läßt sich z. B der Fahrersitz relativ gegenüber dem Lenkrad bzw. den am Armaturenbrett befindlichen Bedienungsorganen in seinem lotrechten und/oder horizontalen Abstand justieren. Bei feststehendem Fahrersitz ist es durch Verschwenken und ggf. auch durch Längenänderung der Lenkradsäule möglich, die Lage des Lenkrades sowie der am Armaturenbrett befindlichen Bedienungsorgane gegenüber dem Fahrer zu justieren.

Ein wesentlicher Nachteil dieser vorbekannten Ausführungsform ist jedoch darin zu sehen, daß der Fahrer keine Möglichkeit hat, zusätzlich auch noch seine Sitzposition optimal gegenüber z. B. einer Windschutzscheibe des Fahrzeuges auszurichten, um eine optimale Sicht für den Fahrer sicherzustellen. So wird z. B. ein besonders großer Fahrer den Fahrersitz gegenüber dem Boden nach oben verstellen müssen, um für seine langen Beine den richtigen Abstand zu den am Boden montierten Fußpedalen zu erhalten. Dies kann aber dazu führen, daß der Fahrer nun zwar eine optimale Sitzposition bezogen auf die verschiedenen Bedienungsorgane einnimmt, jedoch dadurch gleichzeitig seine Sicht nach außen verschlechtert hat. Das gilt umgekehrt ebenso für einen besonders kleinen Fahrer, der zur besseren Erreichbarkeit der Fußpedale den Fahrersitz sehr niedrig einstellen muß und dadurch seine Sichtmöglichkeiten bezogen auf eine ortsfeste Windschutzscheibe verschlechtert.

Der Erfindung liegt somit die Aufgabe zugrunde, den eingangs beschriebenen Fahrerstand so zu verbessern, daß der Fahrer nicht nur den Abstand der Bedienungsorgane relativ zum Fahrersitz, sondern auch seine Sitzposition relativ gegenüber einem außerhalb des Fahrerstandes liegenden ortsfesten Punkt, z. B. einer Windschutzscheibe, optimieren kann.

Diese Aufgabe wird gemäß der Erfindung dadurch gelöst, daß sich sowohl die Bedienungsorgane als auch der Fahrersitz auf einer gemeinsamen Plattform befinden und sich zusammen bewegen.

Man hat also bei der erfindungsgemäßen Ausführungsform nunmehr auch noch die Möglichkeit, den lotrechten Abstand des gesamten Fahrerstandes gegenüber dem Boden zu verändern und zwar unter Beibehaltung der jeweiligen Abstände der Bedienungsorgane vom Fahrersitz. Der Fahrer wird somit zuerst die Sitzhöhe einstellen, bis er hinsichtlich der Sicht, z. B. aus der Fahrerkabine heraus, eine optimale Sitzposition erreicht hat. Dann kann der Fahrer die verschiedenen Bedienungsorgane hinsichtlich ihrer Anordnung relativ gegenüber dem Fahrersitz justieren, um so alle Bedienungsorgane einfach und komfortabel bedienen zu können. Da sich sowohl die Bedienungsorgane als auch der Fahrersitz auf einer gemeinsamen Plattform befinden, gibt es während der Fahrt keine Relativbewegungen zwischen den Bedienungsorganen und dem Fahrer.

In einer zweckmäßigen Ausführungsform kann die Plattform auf einer Trageinrichtung ruhen, die z. B. ein Dämpfungsglied sein kann, das eine begrenzte Bewegung der Plattform in einer angenähert horizontalen Ebene zuläßt. Es kann auch ein die Plattform gegenüber dem Boden in lotrechter Richtung abfederndes Puffersystem vorgesehen werden.

Dem Fahrersitz ist vorzugsweise ein Drehgelenk zur möglichen Drehung des Fahrersitzes gegenüber dem Boden zugeordnet. Es kann auch ein Kippgelenk vorgesehen werden, um die Neigung der Sitzfläche des Fahrersitzes verändern zu können. Eine zusätzliche Justiermöglichkeit für den Fahrersitz ist dann gewährleistet, wenn zwischen Plattform und Fahrersitz eine Sitzverschiebeeinrichtung zur Vor- oder Rückverschiebung des Sitzes relativ zur Plattform vorgesehen ist.

Die Plattform kann mit einem freihängenden Unterboden verbunden sein, der zumindest ein Fußpedal, vorzugsweise aber auch eine verschwenkbare Teleskop-Lenksäule trägt. Um hier eine zusätzliche Justiermöglichkeit der Bedienungsorgane gegenüber dem Fahrersitz zu erzielen, ist es vorteilhaft, wenn zwischen Plattform und Unterboden eine letzteren relativ gegenüber der Plattform verschiebende Höhenverstelleinrichtung vorgesehen ist.

Einige der Bedienungsorgane können auch in eine am Fahrersitz montierte Armlehne eingebaut sein. An der Armlehne kann auch ein Armaturenbrett montiert sein, das in einer abgewandelten Ausführungsform auch die Lenksäule tragen kann.

Weitere Merkmale der Erfindung sind Gegenstand der Unteransprüche und werden zusammen mit weiteren Vorteilen der Erfindung anhand zweier Ausführungsbeispiele erläutert.

In der Zeichnung sind zwei als Beispiele der Erfindung dienende Ausführungsformen dargestellt. Es zeigt

Fig. 1 in perspektivischer Darstellung einen aufgehängten Fahrerstand;

Fig. 2 den Fahrerstand gemäß Fig. 1 in Seitenansicht, eingestellt für einen großen Fahrer;

Fig. 3 in einer Darstellung gemäß Fig. 2 die Einstellung des Fahrerstandes für einen kleinen Fahrer, und

Fig. 4 eine abgewandelte Ausführungsform in einer Darstellung gemäß Fig. 1.

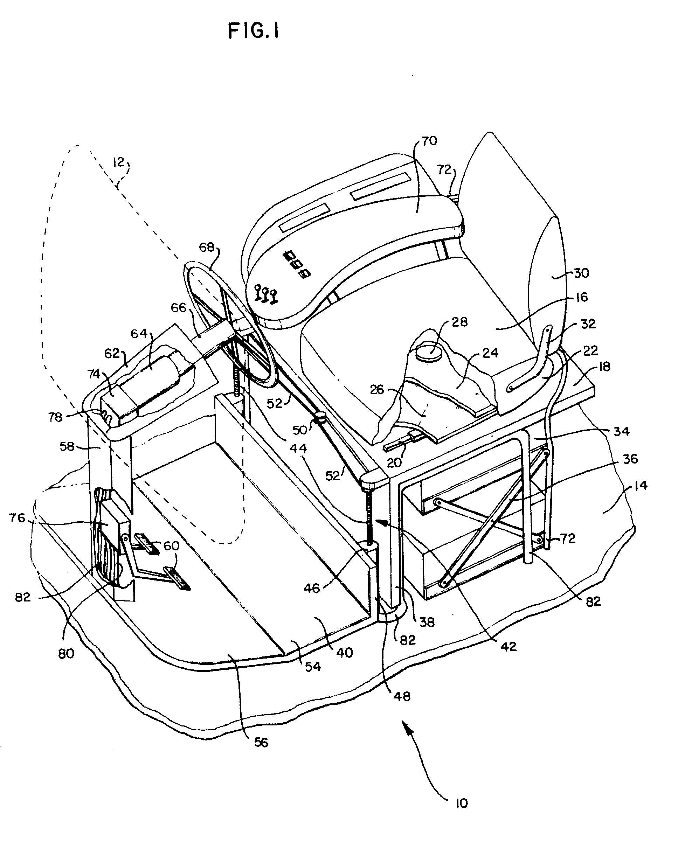

Gemäß den Fig. 1 bis 3 ist ein aufgehängter Fahrerstand 10 in einer Fahrzeugkabine 11 angeordnet, die eine Windschutzscheibe 12 und einen Boden 14 aufweist, der den Fahrerstand trägt. Bei dieser Ausführungsform kann zuerst die Sitzhöhe eines Fahrersitzes 16 so eingestellt werden, daß der Fahrer eine optimale Sicht durch die Windschutzscheibe 12 hat. Anschließend können dann verschiedene Bedienungselemente relativ gegenüber dem Fahrersitz 16 für größtmöglichen Bedienungskomfort eingestellt werden.

Der Fahrerstand 10 besteht aus einer aufgehängten Plattform 18, auf der der Fahrersitz 16 auf herkömmlichen Gleitschienen 20 montiert ist, von denen in Fig. 1 eine dargestellt ist, und die eine Verschiebung des Fahrersitzes nach vorn oder hinten relativ gegenüber der Plattform 18 ermöglichen.

Der Fahrersitz 16 umfaßt ein Sitzpolster 22, das an seiner Unterseite mit einer Sitzplatte 24 versehen ist, unter der eine Bodenplatte 26 vorgesehen ist. Letztere ist auf den Gleitschienen 20 festgelegt. Die Sitzplatte 24 ist auf der Bodenplatte 26 über ein Drehgelenk 28 befestigt, das eine Drehung des gesamten Fahrersitzes 16 gegenüber der Bodenplatte 26 ermöglicht. Das Drehgelenk 28 kann herkömmlicher Bauart sein und weist zweckmäßigerweise eine Verriegelung auf, um den Fahrersitz in der gewünschten Verdrehstellung blockieren zu können. Am Sitzpolster 22 ist über Bügel 32 noch eine Rückenlehne 30 befestigt.

Die Verbindung der Plattform 18 gegenüber dem Boden 14 erfolgt über eine bekannte Dämpfungseinrichtung 34 sowie eine Höhenverstelleinrichtung 36. Die Dämpfungseinrichtung 34 erlaubt begrenzte, gedämpfte Bewegung der Plattform 18 und damit des Fahrersitzes 16 gegenüber dem Boden 14 als Reaktion auf die Bewegung des Fahrzeuges, die sonst zu einer Ermüdung des Fahrers führen würde. Bei dieser Konstruktion kann der Fahrersitz entlang einer einzigen Achse, üblicherweise in der Vorn-Hinten-Richtung, eine gedämpfte Bewegung ausüben. In einer bekannten verbesserten Ausführungsform sind gedämpfte Bewegungen des Fahrersitzes in zwei senkrecht aufeinanderstehenden Achsen möglich, so daß der Fahrersitz begrenzte Bewegungen innerhalb einer im wesentlichen horizontalen Ebene ausführen kann.

Die Höhenverstelleinrichtung 36 ist üblicher Bauart und kann ein Scherensystem umfassen, wie es allgemein bei Schleppersitzen benutzt wird. Üblicherweise umfassen diese Systeme neben der mechanischen Schereneinrichtung auch noch eine Hydraulik, die als eine Art Stoßdämpfer fungiert und eine begrenzte Vertikalbewegung des Fahrersitzes zuläßt.

Die Plattform 18 geht auf der Vorderseite des Fahrzeugsitzes 16 in einen sich nach unten erstreckenden Abschnitt 38 über, an dem ein Unterboden 40 befestigt ist, der einen Teil der aufgehängten Plattform 18 darstellt. Der Unterboden 40 kann gegenüber der Plattform 18 in lotrechter Richtung über eine Höhenverstelleinrichtung 42 relativ verschoben werden. Diese Höhenverstelleinrichtung 42 weist zwei Spindeltriebe 44 auf, die in Spindelmuttern 46 geführt sind, die auf der rückwärtigen Seite eines sich nach oben erstreckenden Steges 48 des Unterbodens 40 montiert sind. Die Höhenverstellung des Unterbodens 40 erfolgt durch Drehung von Riemenscheiben 50, die über Riemen 52 mit den Spindeltrieben 44 in Drehverbindung stehen. Der Antrieb der Riemenscheiben 50 erfolgt über einen nicht dargestellten Motor. Selbstverständlich können die Spindeltriebe durch eine andere geeignete Höhenverstelleinrichtung ersetzt werden.

Der Unterboden 40 weist einen im wesentlichen waagerechten Abschnitt 54 auf, der sich von dem Steg 48 nach vorn erstreckt und in einen leicht nach oben ansteigenden Abschnitt 56 übergeht, in dessen Mitte ein lotrechter Ständer 58 montiert ist, an dessen unterem Ende mehrere Fußpedale 60 angelenkt sind. Am oberen Ende des Ständers 58 ist eine Lenkradsäule 62 über einen herkömmlichen Schwenkmechanismus angelenkt, die eine konventionelle Teleskopsäule 64 umfaßt, durch die eine das Lenkrad 68 tragende Lenkradnabe 66 axial verstellbar ist.

Dementsprechend bilden die auf den Unterboden 40 befestigten Fußpedale 60 sowie die Lenkradsäule 62 einen Teil der aufgehängten Plattform 18 und bewegen sich mit dieser nach oben bzw. unten, wenn die Höhe des Fahrersitzes 16 über die Höhenverstelleinrichtung 36 eingestellt wird. Alle anderen Bedienungsorgane sind in eine am Fahrersitz 16 befestigte Armlehne 70 eingebaut, sind also ebenfalls unmittelbar mit dem Fahrersitz und somit auch mit seiner Plattform 18 verbunden. In der Armlehne 70 können einige Instrumente vorgesehen sein, in jedem Fall aber sollten alle von Hand betätigten Bedienungsorgane eingebaut sein, einschließlich jeweils eines Bedienungsorgans zur Betätigung der Höhenverstelleinrichtung 36 für den Fahrersitz, der Höhenverstelleinrichtung 42 für den Unterboden 40 und der Sitzverschiebeeinrichtung 20, wobei jeweils eine Betätigung in unterschiedlichen Richtungen vorgesehen sein muß. Alle diese Bedienungsorgane bewegen sich somit jeweils zusammen mit dem Fahrersitz, so daß unabhängig von der Höheneinstellung des Fahrersitzes alle Bedienungsorgane immer ihre optimale Zuordnung zum Fahrersitz beibehalten.

Die in die Armlehne 70 eingebauten Bedienungsorgane stehen mit der Kabine über ein flexibles Kabelbündel 72 in Verbindung, das elektrische, hydraulische oder pneumatische Leitungen umfassen kann. Es erstreckt sich von der Armlehne 70 über die Plattform 18 zum Boden 14 und hat genügend Durchhang, um die Höhenjustierung des Fahrersitzes zu ermöglichen.

Das Lenkrad 68 steht über die Lenkradnabe 66 und die Teleskopsäule 64 mit einer Dosierpumpe 74 im oberen Ende des Ständers 58 in Verbindung. Die Fußpedalen 60 sind an einen im Ständer 58 angeordneten Druckzylinder 76 gekoppelt. Dosierpumpe 74 und Druckzylinder 76 stehen mit der Kabine über Hydraulikleitungen 78, 80 in Verbindung, die am unteren Ende des Ständers 58 zu einem Bündel 82 zusammengefaßt sind. Dieses Bündel 82 ist flexibel und erstreckt sich über die Unterseite des Unterbodens 40 auf die Rückseite des sich nach unten erstreckenden Abschnitts 38 der Plattform 18 und weist genügend Durchhang auf, um die Höhenverstellung des Unterbodens 40 ausgleichen zu können. Von dort erstreckt sich das Bündel 82 auf der Unterseite der Plattform 18 bis zum Boden 14, mit genügend Durchhang zum Ausgleich der Höhenverstellung durch die Höhenverstelleinrichtung 36. Nach Durchtritt durch den Boden 14 sind die von der Dosierpumpe 74 kommenden Hydraulikleitungen 78 an einen hydraulischen Lenkmotor angeschlossen. Die vom Druckzylinder 76 kommenden Hydraulikleitungen 60 sind an einen Servozylinder für das Bremssystem angeschlossen. An oder neben dem Ständer 58 ist ein Kupplungspedal angelenkt, das die Kupplung über einen Druck-Servo-Zylinder steuert.

Die Höhenverstelleinrichtung 36 wird anfangs benutzt, um die Höhe des Fahrersitzes 16 relativ gegenüber dem Boden 14 in eine Position zu verstellen, in der der Fahrer optimale Sichtbedingungen hat. Ist dies erfolgt, erfolgt die Positionierung der verschiedenen Bedienungsorgane. Die Höhenverstelleinrichtung 42 dient zur Justierung der Höhe des Unterbodens 40, damit dieser zusammen mit den Fußpedalen 60 für den Fahrer die günstigste Position einnimmt. Durch Verschiebung des Fahrersitzes 16 auf den Gleitschienen 20 nach vorn oder nach hinten gelangt der Fahrer dichter an die Fußpedalen 60 bzw. weiter von diesen weg. Schließlich wird die Lenkradsäule 62 verschwenkt und die Lenkradnabe 66 teleskopartig herausgezogen bzw. eingedrückt, damit das Lenkrad 68 für den Fahrer die günstigste Position einnimmt.

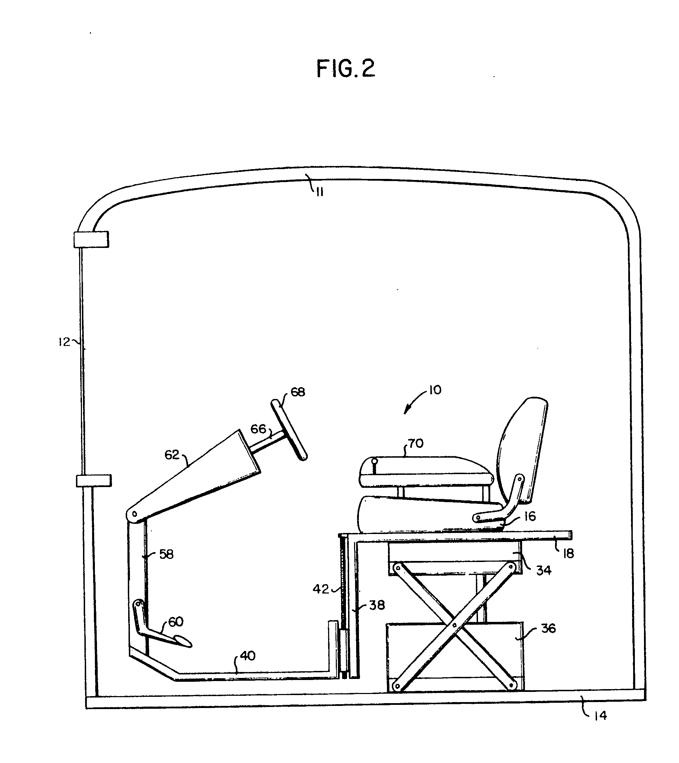

Fig. 2 zeigt die verschiedenen Einstellungen für einen verhältnismäßig großen Fahrer. Die Plattform 18 und damit der Fahrersitz 16 sind relativ gegenüber dem Boden 14 nach unten verfahren in eine Stellung, in der die Augen des Fahrers gegenüber der Windschutzscheibe 12 ihre optimale Höhenlage haben. Der Unterboden 40 mit seinen Fußpedalen 60 ist relativ weit nach unten verfahren, um den langen Beinen des Fahrers Rechnung zu tragen. Gleichzeitig wurde der Fahrersitz 16 nach hinten verschoben. Die Lenkradsäule 62 wurde nach oben verschwenkt; die Teleskopsäule 64 läßt dann eine exakte Positionierung des Lenkrades 68 in bezug auf die Hände des Fahrers zu. Fahrbahnunebenheiten werden weitgehend aufgefangen durch die Dämpfungseinrichtung 34, die den gesamten Fahrerstand 10 einschließlich Fahrersitz 16, Unterboden 40, Fußpedalen 60, Lenkradsäule 62 und Armlehne 70 abfedernd hält, wobei unerwünschte Relativbewegungen zwischen den Kontrollorganen und dem Fahrer ausgeschlossen sind. Der in der Höhenverstelleinrichtung 36 vorgesehene Stoßdämpfer ermöglicht begrenzte und gedämpfte Vertikalbewegungen der gesamten Fahrerstation 10.

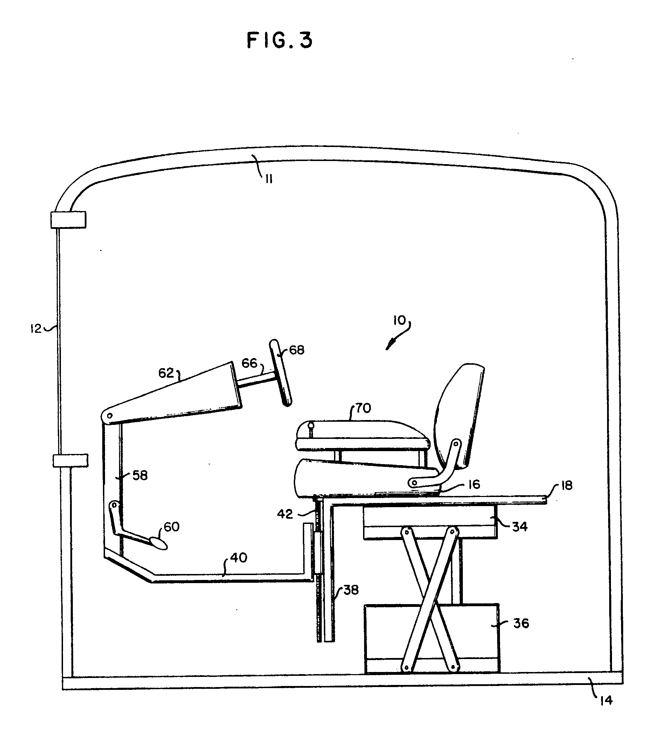

Fig. 3 zeigt die Einstellung der verschiedenen Fahrstandelemente für einen verhältnismäßig kleinen Fahrer.

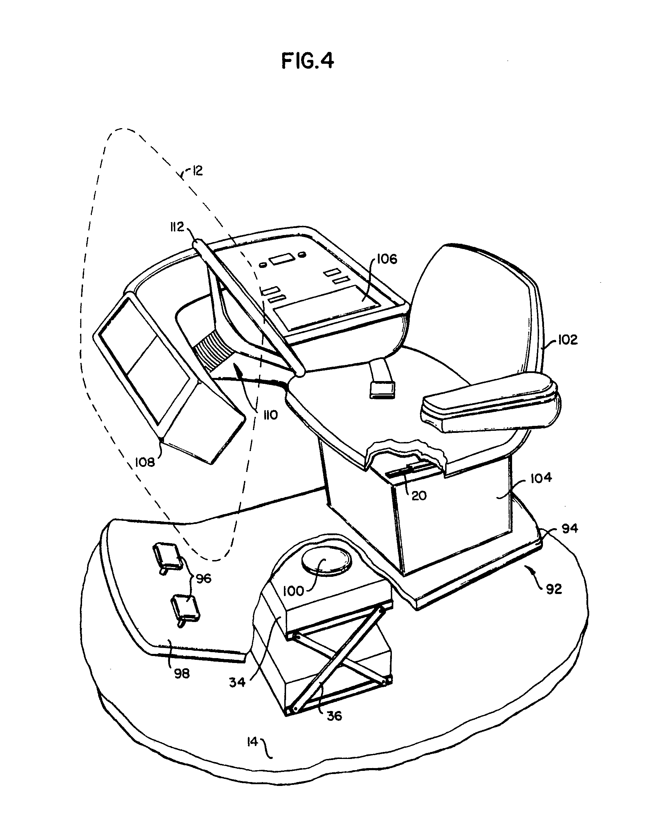

Fig. 4 zeigt eine abgewandelte Ausführungsform für einen Fahrstand 92. Dieser ist ähnlich dem Fahrstand 10 der Fig. 1−3 ausgebildet und weist ebenfalls die Höhenverstelleinrichtung 36 auf, die auf dem Boden 14 des Fahrerhauses montiert ist und auf ihrer Oberseite die Dämpfungseinrichtung 34 trägt. Die hier vorgesehene Plattform 94 ist groß genug, um den Unterboden für den Fahrer sowie mehrere Fußpedale 96 zu umfassen. Die Plattform 94 ist im wesentlichen flach ausgebildet, liegt angenähert horizontal und weist im Bereich der Fußpedale 96 einen nach vorn etwas ansteigenden Abschnitt 98 auf und ist über ein Drehgelenk 100 mit der Dämpfungseinrichtung 34 drehbar verbunden. Das Drehgelenk 100 kann mit dem Drehgelenk 28 der Fig. 1 übereinstimmen, ist vorzugsweise aber etwas größer und widerstandsfähiger ausgebildet, da es größere Massen aufzunehmen hat.

Der Fahrersitz 102 entspricht im wesentlichen dem der Fig. 1 bis 3; er ist über Gleitschienen 20 auf einem Unterteil 104 am hinteren Ende der Plattform 94 befestigt. Der Fahrersitz 102 weist eine Armlehne 106 vergleichbar der der Fig. 1 bis 3 auf, in die viele der manuell zu betätigenden Bedienungsorgane eingebaut sind. Außerdem geht die Armlehne 106 in ein Armaturenbrett bzw. eine Konsole 108 über, die sich von der Armlehne 106 nach außen vor dem Fahrersitz 102 erstreckt. An dieser Konsole 108 ist eine Lenkradsäule 110 befestigt, die vergleichbar ist mit der der Fig. 1 bis 3, also ebenfalls verschwenkbar und teleskopartig auszuziehbar ist.

Der Fahrerstand 92 gemäß Fig. 4 eignet sich insbesondere dort, wo es wünschenswert ist, daß der Fahrersitz innerhalb der Fahrerkabine gedreht werden soll. Das Drehgelenk 100 ermöglicht eine vollständige Drehung des Fahrerstandes 92 innerhalb der Fahrerkabine, die daher verhältnismäßig groß ausgebildet sein muß. Gleichzeitig weist aber dieser Fahrerstand die gleichen Vorteile auf wie der in den Fig. 1 bis 3 dargestellte Fahrerstand. Allerdings fehlt bei dem Fahrerstand 92 die Höhenjustiereinrichtung für den Unterboden mit den daran befestigten Fußpedalen.

## Patentansprüche

1. Aufgehängter Fahrerstand (10; 92), bestehend aus

einer Plattform (18; 94), die auf einem tragenden Boden (14) montiert und diesem gegenüber lageveränderlich ist,
einem auf der Plattform montierten Fahrersitz (16; 102),
einer Sitzhöhenverstelleinrichtung (36),
mehreren Bedienungsorganen (60, 62; 96, 110) und aus
Verstelleinrichtungen (20, 42, 64) zur relativen Lageveränderung der Bedienungsorgane (60, 62; 96, 110) gegenüber dem Fahrersitz (16; 102),

dadurch gekennzeichnet, daß sich sowohl die Bedienungsorgane (60, 62; 96, 110) als auch der Fahrersitz (16; 102) auf einer gemeinsamen Plattform (18; 94) befinden und sich zusammen bewegen.

2. Fahrerstand nach Anspruch 1, dadurch gekennzeichnet, daß die Plattform (18; 94) auf einer Trageinrichtung (34) ruht, die eine begrenzte Bewegung der Plattform in einer angenähert horizontalen Ebene zuläßt.

3. Fahrerstand nach Anspruch 2, dadurch gekennzeichnet, daß die genannte Trageinrichtung (34) ein Dämpfungsglied ist.

4. Fahrerstand nach Anspruch 1, 2 oder 3, dadurch gekennzeichnet, daß die Plattform (18; 94) auf einer Trageinrichtung (34, 36) ruht, die eine begrenzte Bewegung der Plattform relativ zum Boden (14) in angenähert lotrechter Richtung zuläßt.

5. Fahrerstand nach einem der vorhergehenden Ansprüche, gekennzeichnet durch ein dem Fahrersitz (16; 102) zugeordnetes Drehgelenk (28; 100) zur möglichen Drehung des Fahrersitzes gegenüber dem Boden (14).

6. Fahrerstand nach einem der vorhergehenden Ansprüche, gekennzeichnet durch ein dem Fahrersitz (16; 102) zugeordnetes Kippgelenk (28; 100) zur Veränderung der Neigung der Sitzfläche.

7. Fahrerstand nach einem der vorhergehenden Ansprüche, gekennzeichnet durch eine zwischen Plattform (18; 94) und Fahrersitz (16; 102) angeordnete Sitzverschiebeeinrichtung (20) zur Vor- oder Rückverschiebung des Fahrersitzes relativ zur Plattform.

8. Fahrerstand nach einem der vorhergehenden Ansprüche, dadurch gekennzeichnet, daß die genannten Bedienungsorgane (60, 62; 96, 110) auch eine verschwenkbare Teleskop-Lenksäule (62; 110) umfassen.

9. Fahrerstand nach einem der vorhergehenden Ansprüche, dadurch gekennzeichnet, daß mit der Plattform (18; 94) ein freihängender Unterboden (40; 98) verbunden ist, der zumindest ein Fußpedal (60; 96) trägt.

10. Fahrerstand nach Anspruch 9, dadurch gekennzeichnet, daß die Lenksäule (62) auf dem Unterboden (40) montiert ist.

11. Fahrerstand nach Anspruch 9 oder 10, dadurch gekennzeichnet, daß zwischen Plattform (18) und Unterboden (40) eine letzteren relativ gegenüber der Plattform verschiebende Höhenverstelleinrichtung (42) vorgesehen ist.

12. Fahrerstand nach einem der vorhergehenden Ansprüche, dadurch gekennzeichnet, daß am Fahrersitz (16; 102) eine Armlehne (70; 106) montiert ist, in die einige der genannten Bedienungsorgane eingebaut sind.

13. Fahrerstand nach Anspruch 12, dadurch gekennzeichnet, daß die Lenksäule (110) an der Armlehne (106) montiert ist.

14. Fahrerstand nach Anspruch 12 oder 13, dadurch gekennzeichnet, daß an der Armlehne (106) ein Armaturenbrett (108) montiert ist.

# Claims

1. A suspended operator station (10; 92) comprising

a platform (18; 94) mounted on a supporting bottom (14) and relative movable hereto;
an operator seat (16; 102) mounted on the platform;
height adjusting means (36) for the seat;
a plurality of controls (60, 62; 96, 110); and
means (20, 52; 64) for adjusting the positions of said controls (60, 62; 96, 110) relative to said operator seat (16; 102),

characterized in that said controls (60, 62; 96, 110) as well as said operator seat (16; 102) are located on a common platform (18; 94) and they both move together.

2. Operator station according to claim 1, characterized in that the platform (18; 94) is mounted on supporting means (34) permitting limited movement of the platform in an approximately horizontal plane.

3. Operator station according to claim 2, characterized in that said supporting means (34) is an attenuator assembly.

4. Operator station according to claim 1, 2 or 3, characterized in that said platform (18; 94) is mounted on supporting means (34, 36) permitting limited movement of the platform relative to the floor (14) in an approximately vertical direction.

5. Operator station according to one of the preceding claims, characterized by a swivel assembly (28; 100) attached to said operator seat (16; 102) to permit rotational movement of said operator seat relative to said floor (14).

6. Operator station according to one of the preceding claims, characterized by a tilting assembly (28; 100) attached to said operator seat (16; 102) for changing the tilt of the seating.

7. Operator station according to one of the preceding claims, characterized by seat adjusting means (20) for adjusting said operator seat in a fore-aft direction relative to said platform; said seat adjusting means (20) being located between said platform (18; 94) and said operator seat (16; 102).

8. Operator station according to one of the preceding claims, characterized in that said controls (60, 62; 96, 110) also include a tiltable telescopic steering column (62; 110).

9. Operator station according to one of the preceding claims, characterized in that a suspended subfloor (40; 98) is coupled to said platform (18; 94) and has at least one foot pedal (60; 96).

10. Operator station according to claim 9, characterized in that said steering column (62) is mounted on said subfloor (40).

11. Operator station according to claim 9 or 10, characterized in that height adjusting means (42) is installed between said platform (18) and subfloor (40) for adjusting the height of the subfloor relative to the platform.

12. Operator station according to one of the preceding claims, characterized in that an arm rest (70; 106) is mounted on said operator seat (16; 102), some of said controls being installed in said armrest.

13. Operator station according to claim 12, characterized in that said steering column (110) is mounted on the armrest (106).

14. Operator station according to claim 12 or 13, characterized in that a control console (108) is mounted on said armrest (106).

# Revendications

1. Poste de conduite suspendu (10; 92) constitué par une plate-forme (18; 94) montée sur un plancher porteur (14) et dont la position par rapport à celui-ci est variable, un siège de conducteur (16; 102) monté sur la plate-forme, un dispositif (36) de réglage en hauteur du siège, plusieurs organes de manoeuvre (60, 62; 96, 110) et des dispositifs de déplacement (20, 42, 64) pour la modification de position relative des organes de manoeuvre (60, 62; 96, 110) par rapport au siège de conducteur, caractérisé en ce que à la fois les organes de manoeuvre (60, 62; 96, 110) et le siège de conducteur (16; 102) se trouvent sur une plate-forme commune (18; 94) et se déplacent conjointement.

2. Poste de conduite suivant la revendication 1, caractérisé en ce que la plate-forme (18; 94) repose sur un dispositif de support (34) permettant un déplacement limité de la plate-forme dans un plan sensiblement horizontal.

3. Poste de conduite suivant la revendication 2, caractérisé en ce que le dispositif de support précité (34) est constitué par un organe amortisseur.

4. Poste de conduite suivant la revendication 1, 2 ou 3, caractérisé en ce que la plate-forme (18; 94) repose sur un dispositif de support (34, 36) qui permet un déplacement limité de la plate-forme par rapport au plancher (14) dans une direction sensiblement verticale.

5. Poste de conduite suivant l'une quelconque des revendications précédentes, caractérisé en ce qu'il comprend une articulation pivotante (28; 100) conjuguée au siège de conducteur (16; 102) pour permettre le pivotement du siège de conducteur par rapport au plancher (14).

6. Poste de conduite suivant l'une quelconque des revendications précédentes, caractérisé en ce qu'il comprend une articulation de basculement (28; 100) conjuguée au siège de conducteur (16; 102) pour la modification de l'inclinaison de l'assise du siège.

7. Poste de conduite suivant l'une quelconque des revendications précédentes, caractérisé en ce qu'il comprend un dispositif (20) de translation du siège monté entre la plate-forme (18; 94) et le siège de conducteur (16; 102), pour permettre le déplacement par coulissement du siège de conducteur vers l'avant ou vers l'arrière par rapport à la plate-forme.

8. Poste de conduite suivant l'une quelconque des revendications précédentes, caractérisé en ce que les organes de manoeuvre précités (60, 62; 96, 110) comprennent également une colonne de direction télescopique pivotante (62; 110).

9. Poste de conduite suivant l'une quelconque des revendications précédentes, caractérisé en ce qu'un faux-plancher (40; 98) suspendu librement est relié à la plate-forme (18; 94) et porte au moins une pédale (60; 96).

10. Poste de conduite suivant la revendication 9, caractérisé en ce que la colonne de direction (62) est montée sur le faux-plancher (40).

11. Poste de conduite suivant la revendication 9 ou 10, caractérisé en ce qu'il est prévu, entre la plate-forme (18) et le faux-plancher (40), un dispositif de réglage de hauteur (42), permettant le déplacement de ce faux-plancher par rapport à la plate-forme.

12. Poste de conduite suivant l'une quelconque des revendications précédentes, caractérisé en ce qu'un repose-bras (70; 106) est monté sur le siège de conducteur (16; 102), certains des organes de manoeuvre étant montés dans ce repose-bras.

13. Poste de conduite suivant la revendication 12, caractérisé en ce que la colonne de direction (110), est montée sur le repose-bras (106).

14. Poste de conduite suivant la revendication 12 ou 13, caractérisé en ce qu'un tableau de bord porte-instruments (108) est monté sur le repose-bras (106).

FIG.1

# FIG.2

FIG. 3

13

# FIG.4